# EUROPEAN PATENT APPLICATION

(11) **EP 2 214 279 A2**
(43) Date of publication of application: **04.08.2010**
(21) Application number: 09012312.6
(22) Date of filing: 29.09.2009
(51) Int. Cl.: H02G 15/08

(54) **Device for connecting armoring wires of cable**

(30) Priority: 02.02.2009 KR 20090007948
(71) Applicant: LS Cable, Ltd., Gyeonggi-do (KR)
(72) Inventor: Shim, Sung Ik, Gangnam-gu, Seoul (KR); Jeon, Seung Ik, Gangnam-gu, Seoul (KR); Kim, Sung Yun, Suseong-gu, Daegu (KR); Kim, Nam Yul, Gumi-si, Gyeongsangbuk-do (KR); Lee, Tae Ho, Gumi-si, Gyeongsangbuk-do (KR)
(74) Representative: Köhler, Walter

(57) **Abstract**

A device for connecting armoring wires of a cable allows rapid and easy connection of armoring wires at a connecting portion of a power or communications cable. This connecting device includes a hollow cylindrical connection unit 200 through which the cable is capable of passing, a plurality of insert grooves 210 extending from end surfaces of the cylindrical connection unit 200 in a length direction are formed in an outer periphery of the cylindrical connection unit 200, and the armoring wires 50 are inserted into the insert grooves 210 by inserting ends of the armoring wires 50 into the insert grooves 210 at both sides of the cylindrical connection unit 200 in a length direction or pressing outer peripheries of the armoring wires 50 into the insert grooves 210 in a radial direction.

## Description

### [Technical Field]

This disclosure relates to a device for connecting armoring wires of a cable, and more particularly, to a device for connecting armoring wires of a cable, which allows rapid and easy connection of armoring wires at a connecting portion of a power or communications cable.

### [Background Art]

In case of power cables frequently used as submarine cables or optical fiber composite overhead ground wires (OPGW), as well as power cables or communications cables used on land, armoring wires are wound around an outer periphery of the cable to give strength and tensile force to the cable, as disclosed in Korean Laid-open Patent Publication No. 10-2004-0084291, Korean Patent Registration No. 10-0533219, Korean Utility Model Registration No. 20-036686, and so on.

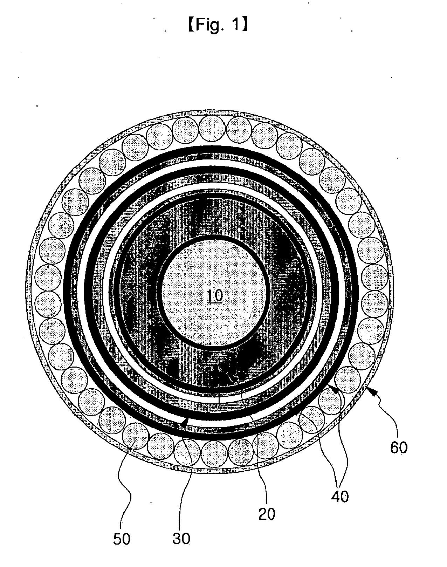

Fig. 1 shows one example of a power cable having armoring wires (steel wires).

The power cable shown in Fig. 1, includes, from its center to its outside, a conductor 10, an insulating layer 20 composed of carbon paper and insulating paper, a sheath 30 formed on an outside of the insulating layer 20, at least one steel strip layer 40, armoring wires 50 mainly composed of galvanized steel material, and a polypropylene yarn asphalt layer 60, which are arranged in order.

This cable is generally manufactured in a unit length of 2 km or less, and in an installation region, ends of cables of unit length are connected using a junction box. In other case, if a middle portion of the cable needs to be repaired after installation, the corresponding portion of the cable is cut and then connected later using a junction box.

When cables are connected through a junction box as mentioned above, the cut armoring wires should also be connected and recovered.

Until now, in order to recover (or, connect) armoring wires, screw portions respectively having right-hand and left-hand threads were formed at one end of both armoring wires 50 by using threading dies, and turnbuckle-type sleeves were screwed to the screw portions of the armoring wires and then connected.

Thus, in the above technique, threading works should be conducted for several tens of armoring wires one by one at the construction site, which is very cumbersome and consumes a lot of time. In particular, if the dies are not accurately handled during the threading work, inferior threads may be formed frequently. Also, if any inferior thread is formed, there is no way to recover the armoring wire without cutting off the inferior portion. In addition, if one armoring wire is cut to a certain length, all of the other armoring wires should be cut to match their lengths. In other case, an extra armoring wire having a length as long as the cut-off inferior portion should be welded to the above armoring wire to give its original length, and then the threading work should be conducted again.

### [Disclosure]

### [Technical Problem]

This disclosure is directed to providing a device for connecting armoring wires of a cable, which allows rapid and easy connection of ends of armoring wires at both sides in a cable connection portion.

### [Technical Solution]

In one aspect, there is provided a device for connecting armoring wires of a cable, wherein the device includes a hollow cylindrical connection unit 200 through which the cable is capable of passing, wherein a plurality of insert grooves 210 extending from end surfaces of the cylindrical connection unit 200 in a length direction are formed in an outer periphery of the cylindrical connection unit 200, and wherein the armoring wires 50 are inserted into the insert grooves 210 by inserting ends of the armoring wires 50 into the insert grooves 210 at both sides of the cylindrical connection unit 200 in a length direction or pressing outer peripheries of the armoring wires 50 into the insert grooves 210 in a radial direction.

The insert grooves 210 of the cylindrical connection unit 200 may have a width narrower than an outer diameter d of the armoring wires 50.

After the armoring wires 50 are inserted into the insert grooves 210, gaps between the armoring wires 50 and the insert grooves 210 may be welded.

In another aspect, there is provided a device for connecting armoring wires of a cable, wherein the device comprises a hollow cylindrical connection unit 300 through which the cable is capable of passing, and wherein a plurality of insert holes 310 are formed in the cylindrical connection unit 300 along a length direction from end surfaces thereof at both sides such that the armoring wires 50 are inserted into the insert holes 310 at both sides, respectively.

After the armoring wires 50 are inserted into the insert holes 310, gaps between the armoring wires 50 and the insert holes 310 may be welded.

### [Advantageous Effects]

Using the device for connecting armoring wires disclosed herein, when armoring wires are connected and restored in a cable connection portion, a cylindrical connection unit prepared in a factory in advance may be used, so there is no need to make a separate connecting device at a construction site.

In addition, since armoring wires may be completely connected by simply inserting the armoring wire into an insert groove of the connecting device or inserting and welding the armoring wire, there is no need of separate additional works such as threading works, and inferiority does not occur at the connection portion.

### [Description of Drawings]

The above and other aspects, features and advantages of the disclosed exemplary embodiments will be more apparent from the following detailed description taken in conjunction with the accompanying drawings in which:
Fig. 1 is a sectional view showing a general cable;
Fig. 2 is a perspective view showing a device for connecting armoring wires according to one embodiment disclosed herein;
Fig. 3 is a sectional view showing the device of Fig. 2;
Fig. 4 is a front view showing the device of Fig. 2;
Fig. 5 shows that armoring wires of a cable connection portion are connected to the connecting device according to one embodiment disclosed herein;
Fig. 6 is a perspective view showing a device for connecting armoring wires according to another embodiment disclosed herein;
Fig. 7 is a sectional view showing the device of Fig. 6;
Fig. 8 is a front view showing the device of Fig. 6; and
Fig. 9 shows another example of the insert hole of Fig. 7.

### [Best Mode]

Exemplary embodiments now will be described more fully hereinafter with reference to the accompanying drawings, in which exemplary embodiments are shown. This disclosure may, however, be embodied in many different forms and should not be construed as limited to the exemplary embodiments set forth therein. Rather, these exemplary embodiments are provided so that this disclosure will be thorough and complete, and will fully convey the scope of this disclosure to those skilled in the art. In the description, details of well-known features and techniques may be omitted to avoid unnecessarily obscuring the presented embodiments.

The terminology used herein is for the purpose of describing particular embodiments only and is not intended to be limiting of this disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, like reference numerals in the drawings denote like elements. The shape, size and regions, and the like, of the drawing may be exaggerated for clarity.

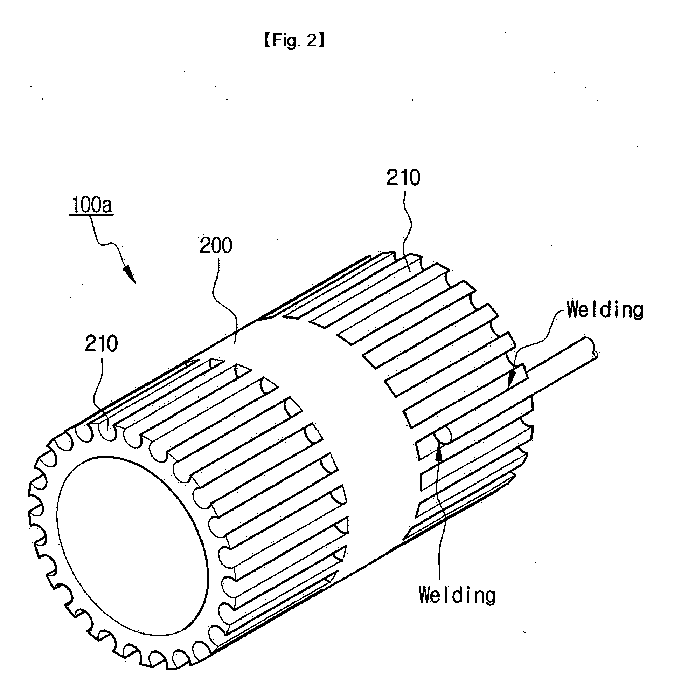

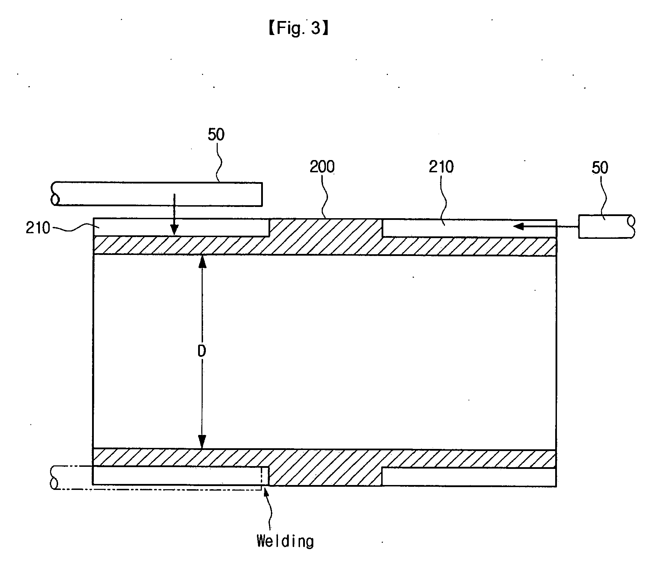

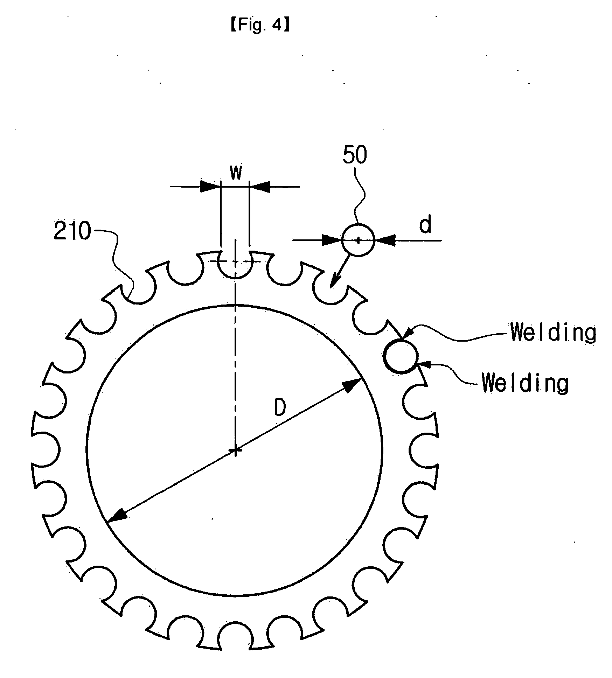

Fig. 2 is a perspective view showing a device for connecting armoring wires according to one embodiment disclosed herein, and Figs. 3 and 4 are respectively a sectional view and a front view showing the device of Fig. 2.

As shown in Figs. 2 to 4, a device 100a for connecting armoring wires according to one embodiment disclosed herein includes a plurality of insert grooves 210 formed in an outer periphery of a hollow cylindrical connection unit 200 and extending from both ends in a length direction. An armoring wire 50 of a cable may be inserted into the insert grooves 210 at both sides.

The cylindrical connection unit 200 has an inner diameter D greater than an outer diameter of a junction box, which will be explained later, so that the cylindrical connection unit 200 may enclose the junction box.

The insert groove 210 is formed by perforating an outer periphery of the cylindrical connection unit 200 inwards into a predetermined depth, and the insert groove 210 has a width w, which is narrower than the outer diameter d of the armoring wire 50 (see Fig. 4).

Thus, as shown in a right region of Fig. 3, the end of the armoring wire 50 may be inserted into the insert groove 210 from an end surface of the cylindrical connection unit 200.

Alternatively, as shown in a left region of Fig. 3, an outer periphery of the armoring wire 50 may be overlapped with an upper portion of the insert groove 210, and then the armoring wire 50 may be inserted by pressing it into the cylindrical connection unit 200 in a radial direction such that the armoring wire 50 may be inserted into the insert groove 210. If the armoring wire 50 is inserted or pressed into the insert groove 210, the armoring wire 50 is not separated from the insert groove 210 since the width w of the insert groove 210 is narrower than the diameter d of the armoring wire 50.

After the armoring wire 50 is inserted or pressed into the insert groove 210 of the cylindrical connection unit 200, a front end of the armoring wire 50 is welded to the cylindrical connection unit 200 (see Figs. 2 and 3), or along with or apart from this process, the gap between the outer periphery of the armoring wire 50 and the insert groove 210 is welded and fixed along a length direction of the insert groove 210 (see Figs. 2 and 4).

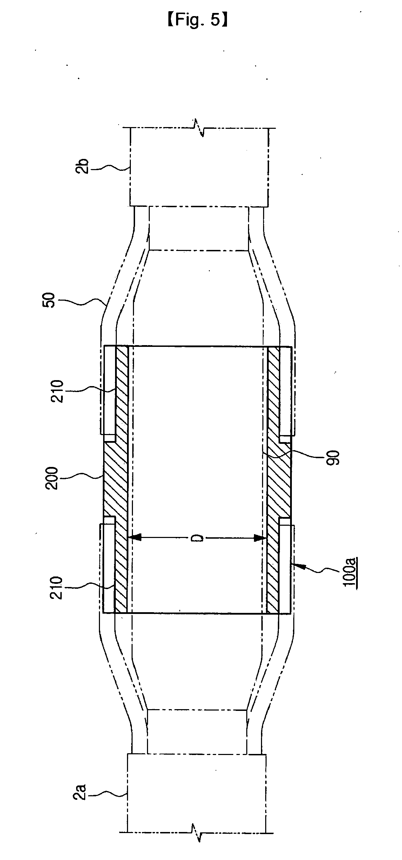

Fig. 5 shows that the armoring wire 50 is connected at a cable connection portion by using the above connecting device 100a.

In order to install the cylindrical connection unit 200 disclosed herein to a cable connection portion, one end of one cable 2a is firstly inserted into the cylindrical connection unit 200. In this state, both cables 2a, 2b are connected using a junction box 90. Outer periphery of the junction box 90 is generally coated with polypropylene yarn asphalt.

If the junction box 90 is completely installed as mentioned above, the cylindrical connection unit 200 located at the outer periphery of one cable 2a is moved to be positioned at the outer periphery of the junction box 90 as shown in Fig. 5. Since the inner diameter D of the cylindrical connection unit 200 is greater than the outer diameter of the junction box 90, the cylindrical connection unit 200 encloses the junction box.

Then, the armoring wires 50 at both sides are inserted or pressed into the insert grooves 210 at both sides of the cylindrical connection unit 200, and then the armoring wires 50 are welded and fixed thereto.

After the armoring wires 50 are connected as mentioned above, outer portions of the cylindrical connection unit 200 and the armoring wires 50, exposed outward, are coated with polypropylene yarn asphalt 60 for sealing.

When the armoring wires 50 are connected and restored at the cable connection portion as mentioned above, it is possible to use the cylindrical connection unit 200 prepared in advance in a factory. Thus, there is no need to make a connecting device at a construction site.

In addition, since the armoring wires 50 are completely connected by simply inserting, or pressing into the insert grooves 210 of the connecting device 100a, there is no need of additional works, for example screw works, at a construction site, and also there occurs no inferiority in the connection portion.

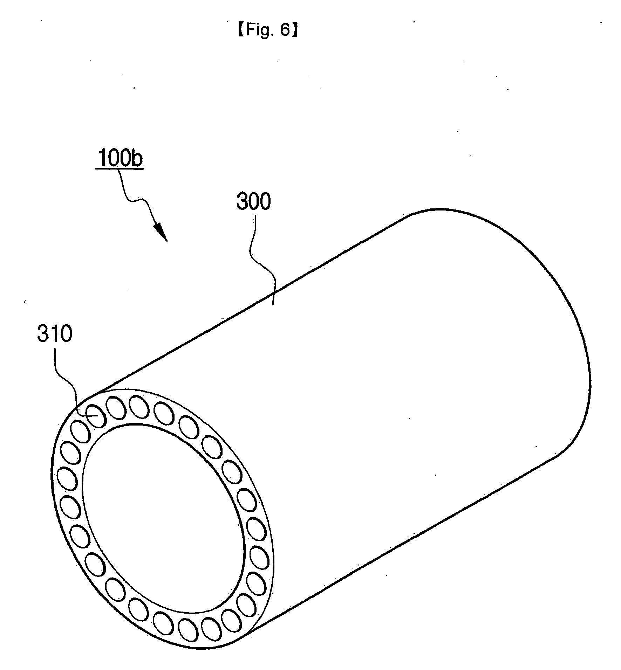

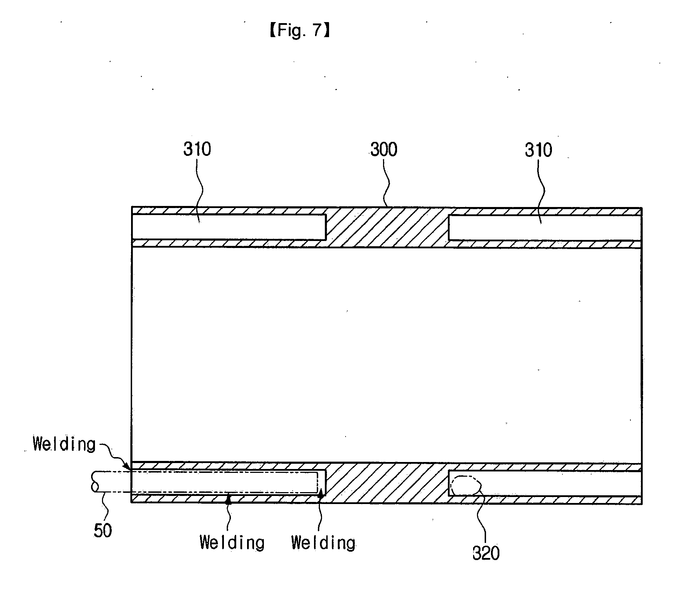

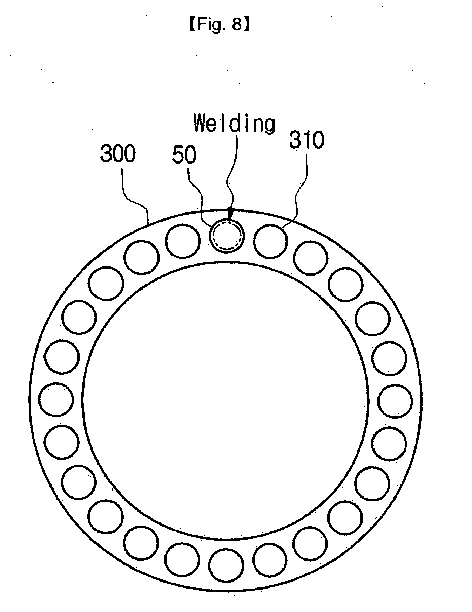

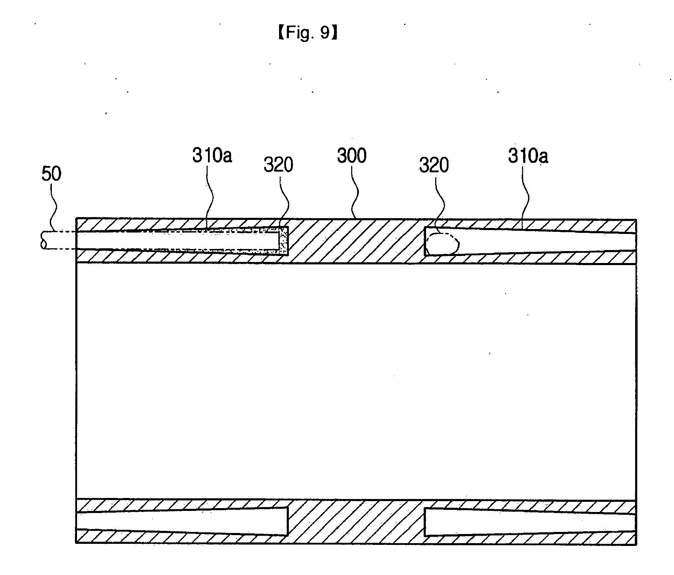

Fig. 6 is a perspective view showing a device for connecting armoring wires according to another embodiment, and Figs. 7 and 8 are respectively a sectional view and a front view showing the device of Fig. 6. And, Fig. 9 shows another example of the insert hole of Fig. 7.

As shown in Figs. 6 to 8, the armoring wire connecting device 100b according to another embodiment has a plurality of insert holes 310 perforated in a cylindrical connection unit 300 and extending in a length direction from both end surfaces thereof. Armoring wires 50 of cables may be inserted into the insert holes 310 at both sides, respectively.

The cylindrical connection unit 300 has an inner diameter D greater than an outer diameter of a junction box so that the cylindrical connection unit 300 may be easily located at an outside of the junction box.

After the armoring wires 50 are inserted into the insert holes 310 of the cylindrical connection unit 300 according to the present invention, gaps between the armoring wires 50 and the insert holes 310 are welded for fixture (see Figs. 7 and 8).

Alternatively, it is also possible that a welding material 320 such as a tin-lead alloy is put into the insert holes 310 of the cylindrical connection unit 300 in advance, and the armoring wires 50 are inserted into the insert holes 310 and then the armoring wires 50 and the insert holes 310 are heated such that the welding material 320 is melted and then hardened (see Figs. 7 and 9).

In case the welding material 320 is put into the insert holes in advance and then melted for adhesion, the insert holes may be tapered insert holes 310a whose diameter increases inwards as shown in Fig. 9.

### [Industrial Applicability]

As described above, if the device for connecting armoring wires of a cable disclosed above is used, the armoring wires may be restored by inserting the armoring wires into a cylindrical connection unit, prepared in advance in a factory, and then simply welding them without any cumbersome additional works for processing threads to the armoring wires at a construction site.

Thus, if the armoring wire connecting device disclosed herein is used as an intermediate connection unit of power cables used as submarine cables or optical fiber composite overhead ground wires (OPGW), as well as power cables or communications cables used on land, the armoring wires may be easily and rapidly connected at a construction site, and inferiority at the connection portion is also prevented.

While the exemplary embodiments have been shown and described, it will be understood by those skilled in the art that various changes in form and details may be made thereto without departing from the spirit and scope of this disclosure as defined by the appended claims.

In addition, many modifications can be made to adapt a particular situation or material to the teachings of this disclosure without departing from the essential scope thereof. Therefore, it is intended that this disclosure not be limited to the particular exemplary embodiments disclosed as the best mode contemplated for carrying out this disclosure, but that this disclosure will include all embodiments falling within the scope of the appended claims.

## Claims

1. A device for connecting armoring wires of a cable, which is used for connecting and restoring the armoring wires (50),
wherein the device comprises a hollow cylindrical connection unit (200) through which the cable is capable of passing,
wherein a plurality of insert grooves (210) extending from end surfaces of the cylindrical connection unit (200) in a length direction are formed in an outer periphery of the cylindrical connection unit (200), and
wherein the armoring wires (50) are inserted into the insert grooves (210) by inserting ends of the armoring wires (50) into the insert grooves (210) at both sides of the cylindrical connection unit (200) in a length direction or pressing outer peripheries of the armoring wires (50) into the insert grooves (210) in a radial direction.

2. The device for connecting armoring wires of a cable according to claim 1, wherein the insert grooves (210) of the cylindrical connection unit (200) have a width narrower than an outer diameter of the armoring wires (50).

3. The device for connecting armoring wires of a cable according to claim 1, wherein, after the armoring wires (50) are inserted into the insert grooves (210), gaps between the armoring wires (50) and the insert grooves (210) are welded.

4. A device for connecting armoring wires of a cable, which is used for connecting and restoring the armoring wires (50),
wherein the device comprises a hollow cylindrical connection unit (300) through which the cable is capable of passing, and
wherein a plurality of insert holes (310) are formed in the cylindrical connection unit (300) along a length direction from end surfaces thereof at both sides such that the armoring wires (50) are inserted into the insert holes (310) at both sides, respectively.

5. The device for connecting armoring wires of a cable according to claim 4, wherein, after the armoring wires (50) are inserted into the insert holes (310), gaps between the armoring wires (50) and the insert holes (310) are welded.
